# NEUE EUROPÄISCHE PATENTSCHRIFT

(11) **EP 0 591 764 B2**
(45) Veröffentlichungstag und Bekanntmachung des Hinweises auf die Entscheidung über den Einspruch: **12.04.2006**
(45) Hinweis auf die Patenterteilung: 12.05.1999
(21) Anmeldenummer: 93115261.5
(22) Anmeldetag: 22.09.1993
(51) Int. Cl.: B27K 3/34, B27K 3/50, A01N 43/653

(54) **Mikrobizide Mittel**
Microbicidal agents
Agents microbicides

(30) Priorität: 05.10.1992 DE 4233337
(43) Veröffentlichungstag der Anmeldung: 13.04.1994
(60) Teilanmeldung: 98113739.1
(73) Patentinhaber: LANXESS Deutschland GmbH, 51369 Leverkusen (DE)
(72) Erfinder: Heuer, Lutz, Dr., D-47800 Krefeld (DE); Wachtler, Peter, Dr., D-51061 Köln (DE); Schwamborn, Michael, Dr., D-51069 Köln (DE); Kugler, Martin, Dr., D-42799 Leichlingen (DE); Buschhaus, Hans-Ulrich, Dr., D-47800 Krefeld (DE)

(56) Entgegenhaltungen:
- EP-A- 0 038 109
- EP-A- 0 050 738
- EP-A- 0 254 857
- EP-A- 0 320 531
- EP-A- 0 336 186
- EP-A- 0 385 076
- EP-A- 0 393 746
- EP-A- 0 413 909
- EP-A- 0 554 833
- EP-A- 0 555 186
- EP-B1- 0 328 466
- DE-A- 3 406 993
- GB-B- 2 264 641
- PROCEEDINGS- BRITISH CROP PROTECTION CONFERENCE- PEST AND DIESEASES Nr. 2 , 1986 , LONDON,GB; Seiten 857 - 864 U. GISI ET AL. 'Biological Profile of SAN 619 F and Related EBI (Ergosterol- Biosynthesis-Inhibiting) fungicides'
- The Pesticide Manual 8th Edition, 1987, S. 460
- "Thesaurus of Agricultural Organisms", Chapman and Hall, 1990 (S. 685,865 und 1225)
- Anlage B, vorgelegt 30.06.1998 (Dr. O. Exner) während des Erteilungsverfahrens
- Anlage 2 zur Eingabe vom 29.05.1998 (2 S.) während des Erteilungsverfahrens
- FRAC-Sterol Biosynthesis Inhibitors Working Group 19 October 2000 (pp. 1-3)
- T-32/84 (Dt. Fassung)

## Beschreibung

Die Anmeldung betrifft synergistische Mischungen enthaltend die Verbindung α-(4-Chlorphenyl-α-(1-cyclopropyl-ethyl)-1H-1,2,4-triazol-1-ethanol (Cyproconazol) und deren Verwendung als Mikrobizid zum Schutz von technischen Materialien.

Es ist bekannt, daß die in der DE-OS 3 406 993 beschriebenen Azolderivate zum Schutz von Pflanzen verwendet werden können.

Gegenstand der vorliegenden Anmeldung ist die Kombination eines Azolderivats der Formel (I) 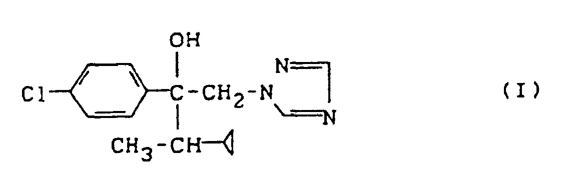 dessen Metallsalze oder Säureadditionsverbindungen mit Tebuconazole oder Propiconazole und deren Verwendung als Mikrobizid zum Schutz von technischen Materialien.

Das Azolderivat kann nicht nur in Form der freien Base sondern auch in Form eines Metallsalz-Komplexes oder als Säureadditions-Salz vorliegen. Als Metallsalz kommen vorzugsweise Salze von Metallen der II. bis IV. Hauptgruppe und der I. und II. sowie IV. bis VII. Nebengruppe des Periodensystems in Frage, wobei Kupfer, Zink, Mangan, Magnesium, Zinn, Eisen, Calcium, Aluminium, Blei, Chrom, Kobalt und Nickel, beispielhaft genannt seien.

Als Anionen der Salze kommen solche in Betracht, die sich vorzugsweise von folgenden Säuren ableiten: Halogenwasserstoffsäuren, wie z.B. Chlorwasserstoffsäure und Bromwasserstoffsäure, ferner Phosphorsäure, Salpetersäure und Schwefelsäure.

Die Metallsalz-Komplexe des Azolderivats können in einfacher Weise nach üblichen Verfahren erhalten werden, so z.B. durch Lösen des Metallsalzes in Alkohol, z.B. Ethanol und Hinzufügen zum Azolfungizid. Man kann Metallsalz-Komplexe in bekannter Weise, z.B. durch Abfiltrieren isolieren und gegebenenfalls durch Umkristallisieren reinigen.

Zur Herstellung von Säureadditionssalzen des Azolderivates kommen vorzugsweise folgende Sauren in Frage: Die Halogenwasserstoffsäuren, wie z.B. Chlorwasserstoffsäure und Bromwasserstoffsäure, insbesondere Chlorwasserstoffsäure, ferner Phosphorsäure, Salpetersäure, Schwefelsäure, mono- und bifunktionelle Carbonsäuren und Hydroxycarbonsäuren, wie z.B. Essigsäure, Propionsäure, 2-Ethylhexansäure, Buttersäure, Mandelsäure, Oxalsäure, Bernsteinsäure, 2-Hydroxy-ethan-dicarbonsäure, Maleinsäure, Fumarsäure, Weinsäure, Citronensäure, Salicylsäure, Sorbinsäure, Milchsäure sowie Sulfonsäuren, wie z.B. p-Toluolsulfonsäure, p-Decyl-phenylsulfonsäure, p-Dodecyl-phenylsulfonsäure, 1,4-Naphthalindisulfonsäure, Alkansulfonsäuren, Benzoesäure und gegebenenfalls substituierte Benzoesäuren.

Die Säureadditions-Salze der Verbindungen können in einfacher Weise nach üblichen Salzbildungsmethoden, z.B. durch Lösung einer Verbindung in einem geeigneten inerten Lösungsmittel und Hinzufügen der Säure, z.B. Chlorwasserstoffsäure, erhalten werden und in bekannter Weise, z.B. durch Abfiltrieren, isoliert und gegebenenfalls durch Waschen mit einem inerten organischen Lösungsmittel gereinigt werden.

Besonders bevorzugt ist die Verbindung (R*, R*)-α-(4-Chlorphenyl)-α-(1-cyclopropylethyl)1H-1,2,4-triazol-1-ethanol.

Überraschenderweise zeigen diese Kombinationen eine besonders hohe mikrobizide, insbesondere fungizide Wirkung, verbunden mit einem breiten Wirkspektrum gegen im Materialschutz relevante Mikroorganismen; sie sind vor allem wirksam gegen Schimmelpilze, holzvertärbende und holzzerstörende Pilze. Beispielhaft - ohne jedoch zu limitieren - seien die folgenden Gruppen von Mikroorganismen genannt:
A: Holzverfärbende Pilze:
   A1: Ascomyceten:
      Ceratocystis wie Ceratocystis minor
   A2: Deuteromyceten:
      Aspergillus wie Aspergillus niger
      Aureobasidium wie Aureobasidium pullulans
      Dactylium wie Dactylium fusarioides
      Penicillium wie Penicillium brevicaule oder Penicillium variabile
      Sclerophoma wie Sclerophoma pithyophila
      Scopularia wie Scopularia phycomyces
      Trichoderma wie Trichoderma viride oder Trichoderma lignorum
   A3: Zygomyceten:
      Mucor wie Mucor spinorus
B: Holzzerstörende Pilze:
   B1: Ascomyceten:
      Chaetomium wie Chaetomium globosum oder Chaetomium alba-arenulum
      Humicola wie Humicola grisea
      Petriella wie Petriella setifera
      Trichurus wie Trichurus spiralis
   B2: Basidiomyceten
      Coniophora wie Coniophora puteana
      Coriolus wie Coriolus versicolor
      Donkioporia wie Donkioporia expansa
      Glenospora wie Glenospora graphii
      Gloeophyllum wie Gloeophyllum abietinum oder Gloeophyllum adoratum oder Gl. protactum oder Gloeophyllum sepiarium oder Gl. trabeum
      Lentinus wie Lentinus cyathiformes oder Lentinus edodes oder Lentinus lepideus oder Lentinus grinus oder L. squarrolosus
      Paxillus wie Paxillus panuoides
      Pleurotus wie Pleurotis ostreatus
      Poria wie Poria monticola oder Poria placenta oder Poria vaillantii oder Poria vaporaria
      Serpula wie Serpula himantoides oder Serpula lacrymans
      Stereum wie Stereum hirsutum
      Tyromyces wie Tyromyces palustris

      B3: Deuteromyceten
         Cladosporium wie Cladosporium herbarum
         Alternaria wie Alternaria tenius

Die Menge des eingesetzten Wirkstoffes ist von der Art und dem Vorkommen der Mikroorganismen der Keimzahl und von dem Medium abhängig. Die optimale Einsatzmenge kann bei der Anwendung jeweils durch Testreihen ermittelt werden. Im allgemeinen ist es jedoch ausreichend 0,001 bis 20 Gew.-%, vorzugsweise 0,05 bis 10 Gew.-%, des Wirkstoff, bezogen auf das zu schützende Material, einzusetzen.

Der Wirkstoff kann als solcher, in Form von Konzentraten oder allgemein üblichen Formulierungen wie Pulver, Granulate, Lösungen, Suspensionen, Emulsionen oder Pasten angewendet werden.

Die genannten Formulierungen können in an sich bekannter Weise hergestellt werden, z.B. durch Vermischen des Wirkstoffes mit mindestens einem Lösungs- bzw. Verdünnungsmittel, Emulgator, Dispergier- und/oder Binde- oder Fixiermittels, Wasser-Repellent, gegebenenfalls Sikkative und UV-Stabilisatoren und gegebenenfalls Farbstoffen und Pigmenten sowie weiteren Verarbeitungshilfsmitteln.

Als Lösungs- bzw. Verdünnungsmittel kommen organischchemische Lösungsmittel oder Lösungsmittelgemische und/oder ein polares organisches Lösungsmittel oder Lösungsmittelgemische und/oder ein öliges bzw. ölartiges organisch-chemisches Lösungsmittel oder Lösungsmittelgemisch und/oder Wasser mit gegebenenfalls einem Emulgator und/oder Netzmittel in Frage. Als übliche schwerflüchtige wasserunlösliche ölige oder ölartige Lösungsmittel werden vorzugsweise die jeweiligen Mineralöle/mineralölhaltige Lösungsmittelgemische oder deren Aromatenfraktionen verwendet. Vorzugsweise seien Testbenzin, Petroleum oder Alkylbenzole genannt, daneben Spindelöl und Monochlornaphthalin. Die Siedebereiche dieser schwerflüchtigen Lösemittel(gemische) überstreichen den Bereich von ca. 170°C bis maximal 350°C.

Die vorbeschriebenen schwerflüchtigen öligen oder ölartigen Lösungsmittel können teilweise durch leichter flüchtige organisch-chemische Lösungsmittel ersetzt werden.

Zur Herstellung eines Holzschutzmittels wird vorzugsweise ein Teil des oben beschriebenen Lösungsmittels oder Lösungsmittelgemisches durch ein polares organischchemisches Lösungsmittel oder Lösungsmittelgemisch ersetzt. Vorzugsweise gelangen dabei Lösungsmittel, die Hydroxylgruppen, Estergruppen, Ethergruppen oder Gemische dieser Funktionalität enthalten, zum Einsatz. Beispielhaft seien Ester oder Glykolether genannt. Als Bindemittel werden erfindungsgemäß verstanden wasserverdünnbare bzw. in organisch-chemischen Lösungsmitteln lösliche, dispergier- oder emulgierbare Kunstharze, bindende trocknende Öle, z.B. auf Basis von Acrylharzen, Vinytharzen, Polyesterharzen, Polyurethanharzen, Alkydharzen, Phenolharzen, Kohlenwasserstoffharzen, Silikon harzen. Das benutzte Bindemittel kann als Lösung, Emulsion oder Dispersion eingesetzt werden. Vorzugsweise werden Gemische aus Alkydharzen und trockendem pflanzlichen Öl verwendet. Besonders bevorzugt sind Alkydharze mit einem Ölanteil zwischen 45 und 70 %.

Das erwähnte Bindemittel kann ganz oder teilweise durch ein Fixierungsmittel(gemisch) oder ein Weichmacher(gemisch) ersetzt werden. Diese Zusätze sollen einer Verflüchtigung der Wirkstoffe sowie einer Kristallisation bzw. Ausfällen vorbeugen. Vorzugsweise ersetzen sie 0,01 bis 30 % des Bindemittels (bezogen auf 100 % des eingesetzten Bindemittels).

Die Weichmacher stammen aus den chemischen Klassen der Phthalsäureester wie Dibutyl-, Dioctyl- oder Benzylbutylphthalat, Phosphorsäureester wie Tributylphosphat, Adipinsäureester wie Di-(2-ethylhexyl)-adipat, Stearate wie Butylstearat und Amylstearat, Oleate wie Butyloleat, Glycerinether oder höhermolekulare Glykolether, Glycerinester sowie p-Toluolsulfonsäureester.

Fixierungsmittel basieren chemisch auf Polyvinylalkylethern wie z.B. Polyvinylmethylether oder Ketonen wie Benzophenon, Ethylenbenzophenon.

Als Lösungs- bzw. Verdünnungsmittel kommt vorzugsweise Wasser in Frage, gegebenenfalls in Mischung mit einem oder mehreren der obengenannten Lösungs- bzw. Verdünnungsmittel, Emulgatoren und Dispergatoren.

Technische Materialien sind erfindungsgemäß nicht lebende Materialien, die für die Verwendung in der Technik zubereitet worden sind. Beispielsweise können technische Materialien, die durch den Wirkstoff vor mikrobieller Veränderung oder Zerstörung geschützt werden sollen, Klebstoffe, Leime, Papiere und Karton, Textilien, Leder, Holz, Anstrichmittel und Kunststoffartikel, Kühlschmierstoffe und andere Materialien sein, die von Mikroorganismen befallen oder zersetzt werden können. Im Rahmen der zu schützenden Materialien seien auch Teile von Produkttionsanlagen, beispielsweise Kühlwasserkreisläufe, genannt, die durch Vermehrung von Mikroorganismen beeinträchtigt werden können. Bevorzugte technische Materialien im Sinne der Erfindung sind Klebstoffe, Leime, Papiere und Kartone, Leder, Holz, Holzwerkstoffe, Anstrichmittel, Kühlschmiermittel, wäßrige Hydraulikflüssigkeiten und Kühlkreisläufe.

Die erfindungsgemäßen Kombinationen bzw. diese enthaltende Mittel bzw. Konzentrate werden vorzugsweise zum Schutz von Holz und Holzwerkstoffen gegen Mikroorganismen, z.B. gegen holzzerstörende oder holzverfärbende Pilze, insbesondere im tropischen Holzschutz eingesetzt.

Unter Holz, welches durch die erfindungsgemäßen Kombinationen bzw. diese enthaltende Mischungen geschützt werden kann, ist beispielshaft zu verstehen: Bauholz, Holzbalken, Eisenbahnschwellen, Brückenteile, Bootsstege, Holzfahrzeuge, Kisten, Paletten, Container, Telefonmasten, Holzzäune, Holzverkleidungen, Holzfenster und - türen, Sperrholz, Spanplatten, Tischlerarbeiten oder Holzprodukte, die ganz allgemein beim Hausbau oder in der Bautischlerei Verwendung finden.

Ein besonders effektiver Holzschutz wird durch großtechnische Imprägnierverfahren, z.B. Vakuum, Doppelvakuum oder Druckverfahren, erzielt.

Die erfindungsgemäßen Kombinationen können mit mindestens einem weiteren antimikrobiell wirksamen Stoff, Fungizid und insbesondere mit anderen Wirkstoffen zur Vergrößerung des Wirkspektrums oder Erzielung besonderer Effekte, wie z.B. dem zusätzlichen Schutz vor Insekten, gemischt werden. In vielen Fällen erhält man dabei synergistische Effekte, das heißt, die Wirksamkeit der Mischung ist größer als die Wirksamkeit der Einzelkomponenten. Besonders bevorzugte Mischungspartner sind z.B. die folgenden Verbindungen:
Sulfenamide wie Dichlafluanid, Tolylfluanid, Folpet, Fluorfolpet;
Benzimidazole wie Carbendazim, Benomyl, Fuberidazole, Thiabendazole oder deren Salze;
Thiocyanate wie Thiocyanatomethylthiobenzothiazol, Methylenbisthiocyanat;
quartäre Ammoniumverbindungen wie Benzyldimethyltetradecylammoniumchlorid, Benzyldimethyldodecylammoniumchiorid, Didecyldimethylammoniumchlorid;
Morpholinderivate wie Tridemorph, Fenpropimorph, Falimorph;
Azole wie Triadimefon, Triadimenol, Bitertanol, Azaconazole, Hexaconazole, Prochloraz, Bromuconazole, Metco-nazole, Penconazole, Difenoconazole, Fenbendazole, Opus, Fensilazole;
2-(1-Chlorcyclopropyl)-1-(2-chlorphenyl)-3-(1,2,4-triazol-1-yl)-propan-2-ol;
lodderivate wie Diiodmethyl-p-tolylsulfon, 3-lod-2-propinyl-alkohol, 4-Chlorphenyl-3-iodpropargylformal, 3-Brom-2,3-diiod-2-propenylethylcarbonat, 2,3,3-Triiodallylalkohol, 3-Brom-2,3-diiod-2-propenylalkohol, 3-lod-2-propinyl-n-butylcarbamat, 3-lod-2-propinyl-n-hexylcarbamat, 3-Iod-2-propinyl-cyclohexylcarbamat, 3-lod-2-propinyl-phenyl-carbamat, O-1-(6-Iodo-3-oxo-hex-5-inyl)butylcarbamat, O-1-(6-Iodo-3-oxo-hex-5-inyl)phenylcarbamat, Napcocide; Phenolderivate wie Tribromphenol, Tetrachlorphenol, 3-Methyl-4-chlorphenol, Dichlorophen, o-Phenylphenol, m-Phenylphenol, p-Phenylphenol, 2-Benzyl-4-chlorphenol;
Bromderivate wie 2-Brom-2-nitro-1,3-propandiol, 2-Brom-2-brommethyl-glutardinitril;
Isothiazolinone wie N-Methylisothiazolin-3-on, 5-Chloro-N-methyl-isothiazolin-3-on, 4,5-Dichloro-N-octyliso-thiazo-lin-3-on, N-Octyl-isothiazolin-3-on;
Benzisothiazolinone wie 4,5-Trimethylen-N-methylisothiazol-3-on;
Pyridine wie 1-Hydroxy-2-pyridinthion (und ihre Na-, Fe-, Mn-, Zn-Salze), Tetrachlor-4-methylsulfonylpyridin; Metallseifen wie Zinn-, Kupfer-, Zinknaphthenat, -octoat, -2-ethylhexanoat, -oleat, -phosphat, -benzoat; Metallsalze und -oxide wie Tributylzinnoxid, Cu₂O, CuO, ZnO, CuSO₄, CuCl₂, Kupferborate, Kupferfluorsilikate, Natriumdichromat, Kaliumdichromat, Kupferhydroxycarbonat;
Dialkyldithiocarbamate wie Na- und Zn-Salze von Dialkyldithiocarbamaten, Tetramethylthiuramdisulfid;
Nitrile wie 2,4,5,6-Tetrachlorisophthalodinitril;
Benzthiazole wie 2-Mercaptobenzothiazol;
Chinoline wie 8-Hydroxychinolin und deren Cu-Salze;
Borverbindungen wie Borsäure, Borsäureester, Borax;
Formaldehyd und Formaldehydabspaltende Verbindungen wie Benzylalkoholmono(poly)-hemiformal, Oxazolidine,Hexahydro-S-triazine, N-Methylolchloracetamid, Paraformaldehyd;
Tris-N-(cyclohexyldiazeniumdioxy)-aluminium, N-(Cyclohexyldiazeniurndioxy)-tributylzinn bzw. K-Salze, Bis-N-(cyclohexyldiazeniumdioxy)-kupfer.

Als Insektizide werden bevorzugt zugesetzt:
Phosphorsäureester wie Azinphos-ethyl, Azinphos-methyl, 1-(4-Chlorphenyl)-4-(O-ethyl,S-propyl)phosphoryloxy-pyrazol, Chlorpyrifos, Coumaphos, Demeton, Demeton-S-methyl, Diazinon, Dichlorvos, Dimethoate, Ethoprophos, Etrimfos, Fenitrothion, Fenthion, Heptenophos, Parathion, Parathion-methyl, Phosalone, Phoxim, Pirimiphos-ethyl, Pirimiphos-methyl, Profenofos, Prothiofos, Sulfprofos, Triazophos und Trichloron;
Carbamate wie Aldicarb, Bendiocarb, 2-(1-Methylpropyl)-phenylmethylcarbamat, Butocarboxim, Butoxycarboxim, Carbaryl, Carbofuran, Carbosulfan, Cloethocarb, Isoprocarb, Methomyl, Oxamyl, Pirimicarb, Promecarb, Propoxur und Thiodicarb;
Organosiliciumverbindungen, vorzugsweise Dimethyl(phenyl)silyl-methyl-3-phenoxybenzylether wie Dimethyl(4-ethoxyphenyl)-silylmethyl-3-phenoxybenzylether oder (Dimethylphenyl)-silyl-methyl-2-phenoxy-6-pyridylmethylether wie z.B. Dimethyl(9-ethoxy-phenyl)-silylmethyl-2-phenoxy-6-pyridylmethylether oder [(Phenyl)-3-(3-phenoxyphenyl)-propyl](dimethyl)-silane wie z.B. (4-Ethoxyphenyl)-[3-(4-fluoro-3-phenoxyphenyl-propyl]dimethylsilan.
Pyrethroide wie Allethrin, Alphamethrin, Bioresmethrin, Byfenthrin, Cycloprothrin, Cyfluthrin, Decamethrin, Cyhalothrin, Cypermethrin, Deltamethrin, Alpha-cyano-3-phenyl-2-methylbenzyl-2,2-dimethyl-3-(2-chlor-2-trifluor-methylvinyl)cyclopropancarboxylat, Fenpropathrin, Fenfluthrin, Fenvalerate, Flucythrinate, Flumethrin, Fluvalinate, Permethrin, Resmethrin und Tralomethrin;
Nitroimine und Nitromethylene wie 1-[(6-Chlor-3-pyridinyl)-methyl]-4,5-dihydro-N-nitro-1H-imidazol-2-amin (Imidacloprid), N-[(6-Chlor-3-pyridyl)methyl-]N²-cyano-N¹-methylacetamid.

Die auf diese Weise hergestellten erfindungsgemäßen Mischungen, Konzentrate und Formulierungen zeigen Wirksamkeit nicht nur gegen die vorbenannten Pilze sondern auch gegen materialzerstörende Insekten, falls ein Insektizid zugegen ist. Beispielhaft - ohne zu limitieren - seien als materialzerstörende Insekten genannt:
A: Hautflügler:
   Sirex juvencus
   Urocerus augur
   Urocerus gigas
   Urucerus gigas taignus
B: Käfer:
   Anobium punctatum
   Apate monachus
   Bostrychus capucins
   Chlorophores pilosus
   Dendrobium pertinex
   Dinoderus minutus
   Ernobius mollis
   Heterobostrychus brunneus
   Hylotrupes bajulus
   Lyctus africanus
   Lyctus brunneus
   Lyctus linearis
   Lyctus planicollis
   Lyctus pubescens
   Minthea rugicollis
   Priobium carpini
   Ptilinus pecticornis
   Sinoxylon spec.
   Trogoxylon aequale
   Trypto dendron spec.
   Xestobium rufovillosum
   Xyleborus spec.
C: Termiten:
   Coptotermes formosanus Cryptotermes brevis Heterotermes indicola Kalotermes flavicollis Mastotermes darwiniensis Reticulitermes flavipes Reticulitermes lucifugus Reticulitermes santonensis Zootermopsis nevadensis

Als andere Wirkstoffe kommen in Betracht Algizide, Molluskizide, Wirkstoffe gegen "sea animals", die sich auf z.B. Schiffsbodenanstrichen ansiedeln.

Besonders bevorzugt sind folgende Abmischpartner:
Dichlofluanid, Tolylfluanid,
Benzyldimethyldodecylammoniumchlorid, Didecyldimethylammoniumchlorid,
Azaconazole, Hexaconazole,
3-Brom-2,3-diiod-2-propenylalkohol, 3-(od-2-propinyl-n-butylcarbamat,
o-Phenylphenol, m-Phenylphenol, p-Phenylphenol, 3-Methyl-4-chlorphenol,
Thiocyanatomethylthiobenzothiazol,
N-Methylisothiazolin-3-on, 5-Chloro-N-methylisothiazolin-3-on, 4,5-Dichloro-N-octylisothiazolin-3-on, N-Octyl-isothiazolin-3-on,
Benzylalkoholmono(poly)-hemiformal, N-Methylolchloracetamid, Phoxim,
Cyfluthrin, Permethrin, Cypermethrin, Deltamethrin, Imidacloprid.

Die zum Schutz der technischen Materialien verwendeten mikrobiziden Mittel oder Konzentrate enthalten den Wirkstoff der Formel (I) in einer Konzentration von 0,01 bis 95 Gew.-%, insbesondere 0,01 bis 60 Gew.-%, daneben 0,001 bis 95 Gew.-% Tebuconazol oder Propiconazol sowie gegebenenfalls ein oder mehrere geeignete weitere Fungizide, Insektizide oder weitere Wirkstoffe wie oben genannt.

Die erfindungsgemäßen Mittel ermöglichen in vorteilhafter Weise, die bisher verfügbaren mikrobiziden Mittel durch effektivere zu ersetzen. Sie zeigen eine gute Stabilität und haben in vorteilhafter Weise ein breites Wirkungsspektrum.

## Patentansprüche (Patentansprüche für folgende(n) Vertragsstaat(en): AT, DE, DK, PT, SE)

1. Kombination von Cyproconazole mit Tebuconazole oder Propiconazole.

2. Kombination von Cyproconazole mit Tebuconazole.

3. Kombination von Cyproconazole mit Propiconazole.

4. Verwendung einer Kombination wie in einem der Ansprüche 1 bis 3 definiert als Mikrobizid zum Schutz von technischen Materialien.

5. Verfahren zum Schutz von technischen Materialien, **dadurch gekennzeichnet, daß** man die technischen Materialien mit einer Kombination wie in einem der Ansprüche 1 bis 3 definiert, behandelt.

6. Mittel enthaltend eine Kombination wie in einem der Ansprüche 1 bis 3 definiert.

7. Technische Materialien enthaltend eine Kombination wie in einem der Ansprüche 1 bis 3 definiert.

## Patentansprüche (Patentansprüche für folgende(n) Vertragsstaat(en): BE, CH, LI, ES, FR, GB, IT, NL)

1. Verwendung einer Kombination von Cyproconazole mit Tebuconazole oder Propiconazole als Mikrobizid zum Schutz von technischen Materialien.

2. Verwendung einer Kombination von Cyproconazole mit Tebuconazole als Mikrobizid zum Schutz von technischen Materialien.

3. Verwendung einer Kombination von Cyproconazole mit Propiconazole als Mikrobizid zum Schutz von technischen Materialien.

4. Verfahren zum Schutz von technischen Materialien, **dadurch gekennzeichnet, dass** man die technischen Materialien mit einer Kombination von Cyproconazole mit Tebuconazole oder Propiconazole behandelt.

5. Technische Materialien enthaltend eine Kombination von Cyproconazole mit Tebuconazole oder Propiconazole.

## Claims (Claims for the following Contracting State(s): AT, DE, DK, PT, SE)

1. Combination of cyproconazole with tebuconazole or propiconazole.

2. Combination of cyproconazole with tebuconazole.

3. Combination of cyproconazole with propiconazole.

4. Use of the combination as defined in any of Claims 1 to 3 as microbizide for the protection of industrial materials.

5. Method of protecting industrial materials, **characterized in that** the industrial materials are treated with a combination as defined in any of Claims 1 to 3.

6. Composition comprising a combination as defined in any of Claims 1 to 3.

7. Industrial materials comprising a combination as defined in any of Claims 1 to 3.

## Claims (Claims for the following Contracting State(s): BE, CH, LI, ES, FR, GB, IT, NL)

1. Use of a combination of cyproconazole with tebuconazole or propiconazole as microbizide for the protection of industrial materials.

2. Use of a combination of cyproconazole with tebuconazole as microbizide for the protection of industrial materials.

3. Use of a combination of cyproconazole with propiconazole as microbizide for the protection of industrial materials.

4. Method of protecting industrial materials, **characterized in that** the industrial materials are treated with a combination of cyproconazole with tebuconazole or propiconazole.

5. Industrial materials comprising a combination of cyproconazole with tebuconazole or propiconazole.

## Revendications (Revendications pour l'(les) Etat(s) contractant(s) suivant(s): AT, DE, DK, PT, SE)

1. Combinaison de cyproconazole avec le tébuconazole ou le propiconazole.

2. Combinaison de cyproconazole avec le tébuconazole.

3. Combinaison de cyproconazole avec le propiconazole.

4. Utilisation d'une combinaison telle que définie dans l'une quelconque des revendications 1 à 3, comme microbicide, pour la protection des matériaux techniques.

5. Procédé de protection de matériaux techniques, **caractérisé en ce que** l'on traite les matériaux techniques avec une combinaison telle que définie dans l'une quelconque des revendications 1 à 3.

6. Agent contenant une combinaison telle que définie dans l'une quelconque des revendications 1 à 3.

7. Matériaux techniques contenant une combinaison telle que définie dans l'une quelconque des revendications 1 à 3.

## Revendications (Revendications pour l'(les) Etat(s) contractant(s) suivant(s): BE, CH, LI, ES, FR, GB, IT NL)

1. Utilisation d'une combinaison de cyproconazole avec du tébuconazole ou du propiconazole en tant que microbicide pour la protection de matériaux industriels.

2. Utilisation d'une combinaison de cyproconazole avec du tébuconazole en tant que microbicide pour la protection de matériaux industriels.

3. Utilisation d'une combinaison de cyproconazole avec du propiconazole en tant que microbicide pour la protection de matériaux industriels.

4. Procédé de protection de matériaux industriels, **caractérisé en ce que** les matériaux industriels sont traités avec une combinaison de cyproconazole avec du tébuconazole ou du propiconazole.

5. Matériaux industriels contenant une combinaison de cyproconazole avec du tébuconazole ou du propiconazole.
